(19)

Europäisches Patentamt

European Patent Office

Office européen des brevets

(11) **EP 4 495 550 A1**

(12) **EUROPEAN PATENT APPLICATION**

(43) Date of publication:
**22.01.2025 Bulletin 2025/04**

(21) Application number: **23207063.1**

(22) Date of filing: **31.10.2023**

(51) International Patent Classification (IPC):
**G01C 21/34** (2006.01)

(52) Cooperative Patent Classification (CPC):
**G01C 21/3461; G01C 21/3492**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2023 AM 20230068**

(71) Applicant: **Harman International Industries, Incorporated
Stamford, CT 06901 (US)**

(72) Inventors:
• **FILIMONOV, Andrey Viktorovich
607610 Kamenki (RU)**
• **BAKHCHINA, Anastasiya Vladimirovna
603069 Nizhniy Novgorod (RU)**
• **GROMAZIN, Oleg Andreevich
Nizhniy Novgorod (RU)**
• **SHISHALOV, Ivan Sergeevich
603074 Nizhniy Novgorod (RU)**
• **GRIGOREVNA, Burova Anzhela
603159 Nizhny Novgorod (RU)**

(74) Representative: **Rummler, Felix
Maucher Jenkins
Liebigstraße 39
80538 München (DE)**

(54) **METHOD AND SYSTEM FOR DETERMINING A STRESS INDEX OF A ROUTE**

(57) A computer implemented method for determining a stress index of a route, comprising: determining, based on a cartographic representation, at least one route from a first point to a second point; dividing, by a stress index determination system, the at least one route into one or more links and/or intersections; determining, by the stress index determination system, the stress for the at least one or more links and/or intersections; combining, by the stress index determination system, the stress of the one or more links and/or intersections to obtain an overall stress index of the one or more routes.

Fig. 2

EP 4 495 550 A1

**Description**

<u>TECHNICAL FIELD</u>

The present disclosure relates to method and system for determining a stress index of a route, a stress index determination system, and a navigation system for navigating a route,

<u>BACKGROUND</u>

A study of 2014 examining traffic accidents has found out that human factors played a role in a staggering of 95% of the accidents (Sabey, B. E., Taylor, H. (1980) "The known risks we run: The highway", Supplementary Report SR 567, Transport and Road Research Laboratory, Crowthorne). Conventional navigation systems equipped in vehicles or on smart devices typically present drivers with various route options, including the fastest, shortest, or most energy-efficient path from a starting point to a destination. However, the conventional navigation systems do not take into account the potential accident risks associated with the recommended routes.

Various studies have concluded that stress induced by road conditions can be a crucial factor regarding comfort and safety while driving. Some examples of these studies include J.D. Hill et al., Transportation Research Part F, 10(3), 2007, 177; O. Bitkina et al., mdpi sensors, 2019, 19(9), 2152. Factors such as heavy traffic or a high number of complex intersections can contribute to increased stress for drivers (M. Ringhard et al., Transportation Research Part F, 60, 2019, 274; N. Distefano et al., (2020) Physiological and driving behavior changes associated with different road intersections, European Transport, 77. 4). This increased stress may subsequently raise the likelihood of a traffic accident occurring.

Thus, suggesting a stress-free routing has been becoming a new trend in road navigation and road structure planning. In applications of road navigation, estimating stress is an essential aspect, where a car navigation system plans a route to avoid stress. In applications of road structure planning, the road network can be designed and implemented in various ways to reduce stress the road may cause.

Therefore, there is a need for a method and a system to determine stress index of a route so as to reduce the risk of accidents, and thereby improving road safety.

<u>SUMMARY</u>

The present disclosure is defined in the appended independent claims. Advantageous embodiments are defined in the dependent claims.

In particular, according to a first aspect of present disclosure, there is provided a computer implemented method for determining a stress index of a route, including: determining, based on a cartographic representation, at least one route from a first point to a second point; dividing, by a stress index determination system, the at least one route into one or more links and/or intersections; determining, by the stress index determination system, a stress index for the at least one or more links and/or intersections; combining, by the stress index determination system, the stress indexes of the links and/or intersections to obtain an overall stress index of the one or more route. By dividing the route into a plurality of links and intersections, the stress index of the route can be determined accurately. It is considered in the present disclosure that the stress index of a route is a cumulative factor that increases with the distance a driver drives along the route and/or the time within which the driver drives. Thus, the overall stress associated with a specific route is calculated by summing or integrating the stress determined for each link and/or intersection along that route or road.

In the present disclosure, stress index of a route refers to the cognitive and emotional strain experienced by drivers when navigating this route. It can be influenced by a variety of factors, such as road layout, the presence of pedestrians and cyclists, traffic controls, environmental conditions, or the like. For example, high stress index is often associated with complex urban environments, which may require more frequent decision-making and increased vigilance due to the presence of pedestrians, intersections, and other vehicles. Conversely, lower stress levels are typically experienced on highways or other roads with simpler layouts and fewer potential hazards or distractions.

Generally, a link in the present disclosure refers to a road segment having constant road properties along the road segment. Such a link may also be referred as substantially homogenous. For example, a link having same number of lanes may be considered substantially homogenous. An intersection in the present disclosure refers to a road segment hat is a junction where more than two links converge. The intersection comprises a crossing and a link at the intersection. The intersection is also known as a crossing in a route where vehicles or pedestrians are allowed to change from one link to another. In one embodiment, the method may also include comparing the stress index of the one or more routes and suggesting to a driver a route having the lowest stress index. In such way, the driver can choose a relatively stress-free route so that not only the driving safety, but also the driving experience can be improved.

In one embodiment, the stress of the link or intersection may be determined based on a complexity of the link or intersection. Complexity of a link or intersection in the present disclosure refers to the degree of difficulty in navigating a particular link or an intersection depending on various structural and/or operational attributes. The higher the complexity, the more challenging it is for drivers to navigate the road, which in turn increases the stress index of the route. For example, the link may be a simple two-lane road without overtaking possibility. The link may also be a four-lane road including an exit. Such variable complexities influence the stress index of the route.

In one embodiment, the complexity of the link is determined based on attributes of the link relating to the number of lanes of the link and whether it is possible to change from one lane to another.

In the present disclosure, attribute refers to any specific feature or characteristics of a road segment that can influence its complexity. Attributes can include but not limited to the number of lanes, the possibility of lane changing and merging, the turning types of the intersection, or the like. Preferably, for each attribute, a coefficient may be assigned according to the degree of complexity that the attribute contributes. This coefficient quantifies the influence of the specific attribute on the overall complexity of a road segment (link or intersection).

Preferably, the complexity of the link may be determined based on the number of lanes of the link and whether it is possible to change from one lane to another. More preferably, the complexity of the link may also be determined dependent on the type of road markings painted on the link. Other properties can also be taken into account when considering the complexity of the link.

In one embodiment, the stress of the link may be defined by a link model:

$$\left(\left(\sum_{lanes} (lane_k + change_k) \cdot enviroment\right) + highway_k + tunnel_k + bridge_k + normal_k\right) \cdot time$$

In the link model, k represents the k-th lane of the link (k ranges from 1 to k); $lane_k$ refers to the complexity of the k-th lane depending on attribute relating to whether the lane includes an exit. For example, the lane can be a normal lane without exit, or a lane including an exit. A lane including an exit has a higher complexity compared with the one without an exist. Thus, in an exemplary embodiment, the lane including an exit may be assigned a higher coefficient to this attribute, indicating that it may increase the complexity of the link. $change_k$ refers to the complexity of the link associated with attributes relating to whether it is possible to change from one lane to another. For example, if it is possible to change from one lane to another, the complexity of the link increases, which in turn increases the stress index of the road. *Enviroment* refers to the complexity of the link associated with the road type of the link, which proportionally increases or decreases the complexity of the link. Preferably, the attribute of *enviroment* may be an urban road, country road or suburban road, which indicates location and/or surrounding environment the link may be subjected to.

In the link model, the stress of the link also depends on at least one of the following factors: time used by passing the link; whether the link is at least part of a highway, tunnel, bridge or normal street. $highway_k$, $tunnel_k$, $bridge_k$, and $normal_k$ refer to complexity of the link associated with whether the link is at least part of a highway, tunnel, bridge, or a normal street. Apart from these factors, other factors may also be considered. For example, the presence of construction sites along the route, or the proximity of institutions like kindergartens and schools.

In one embodiment, the stress of the intersection may depend on at least one of the following factors: time used to pass by the intersection; type of the intersection; type of turning at the intersection; whether there is traffic light at the intersection; and the stress of the link at the intersection. The type of the intersection may be an intersection where two or more roads meet and cross each other, an intersection where one road meets another at a right angle but does not cross it, forming a "T" shape when viewed from above, an intersection involving multiple roads or lanes, or any other situations where lanes or roads are merging that are not covered by former categories. The type of turning at the intersection may include straight ahead, meaning no turns to be made, a turn at the intersection interfering with pedestrian traffic, a left turn across oncoming traffic lanes, or a U-turn.

In one embodiment, the stress of the intersection may be defined by an intersection model: ($nodetype_k$ + $turntype_k$ + $trafficlight_k$ + $\Sigma_{link}$) · *time*. $Nodetype_k$ refers to the complexity of the intersection associated with the attribute relating to how roads merge at the intersection; $turntype_k$ refers to the complexity of the intersection associated with the attribute relating to the type of directional movement allowed or expected at the crossing; $trafficlight_k$ refers to the complexity of the intersection associated with the presence of a traffic light at the crossing; *time* refers to the driving time required to navigate the intersection; and $\Sigma_{link}$ refers to stress of the sum of the links the driver travels through when crossing the intersection.

According to a further aspect of present disclosure, there is provided a stress index determination system for determining stress index of a route, the stress index determination system is configured to carry out the methods as mentioned above. The stress index determination system may be implemented as software, hardware, firmware or the like which can analyse various factors and calculate the stress index associated with a particular route. Apart from performing the methods as described above, the stress index determination system may also take other factors into account, such as traffic congestion, road conditions, weather conditions, and even potential hazards. This stress index determination system provides a quantifiable measure of the likely stress a driver may experience on that specific route. Consequently, drivers are able to make informed decisions about their travel plans, allowing them to select routes that are not only efficient but also comparatively stress-free. The system enhances the driving experience, mitigate the potential risks of driving under stress, and contribute to overall road safety.

According to a further aspect of present disclosure, there is provided a navigation system for navigating a route, the navigation system including the stress index determination system as mentioned above. The navigation system may be an integrated navigation system in an infotainment system of a vehicle, or a navigation application on a smart device (smart phone, smart tablet, smart watch, etc.)

According to a further aspect of present disclosure, there is provided a computer readable medium comprising instructions which, when executed by a computing device, cause the computing device to carry out the method as mentioned above.

## BRIEF DESCRIPTION OF THE DRAWINGS

Fig. 1 is an exemplary road representation showing a route between a starting point and a destination;
Fig. 2 is an exemplary road including links according an embodiment;
Fig. 3 shows exemplary links having various complexities;
Fig. 4 is a block diagram showing factors influencing stress in a link;
Fig. 5 shows exemplary intersections having various complexities;
Fig. 6 is a block diagram showing factors influencing stress in an intersection;
Fig. 7 is a flow diagram showing a process of determining a stress index of a route according an embodiment;
Fig. 8A to 8C show results of stress index determined by a stress index determination system according to an embodiment; and
Fig. 9A and 9B are comparison of stress index determined by the stress index determination system and experimental measurements.

## DETAILED DESCRIPTION

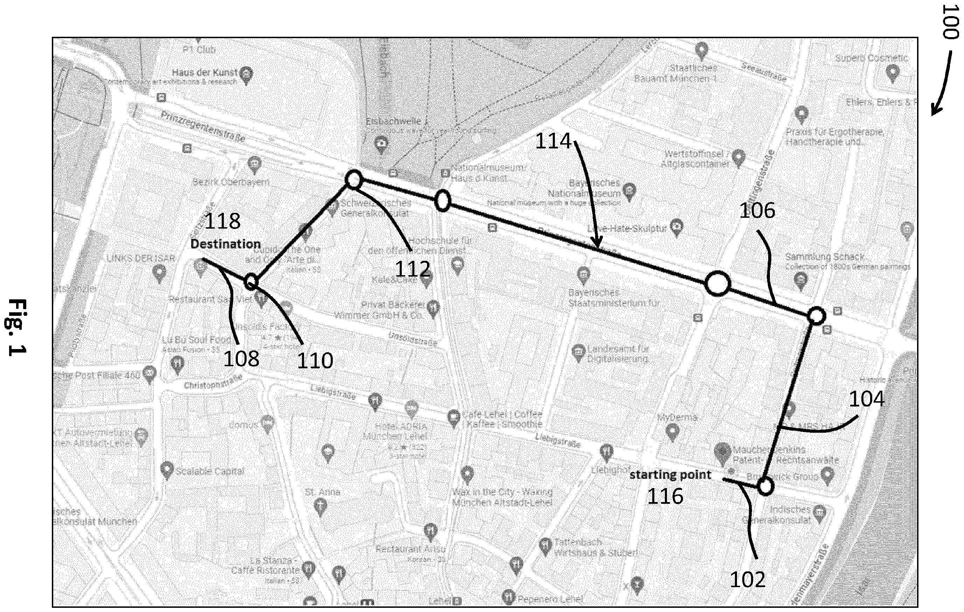

Fig. 1 is an exemplary road representation 100 showing a route 114 between a starting point 116 and a destination 118. As can be seen from Fig. 1, a route connecting a first point with a second point can generally be divided into (or represented by) a plurality of links 102, 104, 106 and 108, etc. and intersections 110, 112, etc. A link may be a road segment such as 102 and 108, one end of which is connected to an intersection. The link may also be a road segment such as 104 and 106, both ends of which are connected to intersections, respectively. In the present disclosure, an intersection is a junction where more than two links converge, thus allowing vehicles or pedestrians to change from the travelling direction. In the present disclosure, the motivation for segmenting a route in this way is due to the fact that stress index of links and intersections depends on different factors, and thus it is preferable to consider them separately.

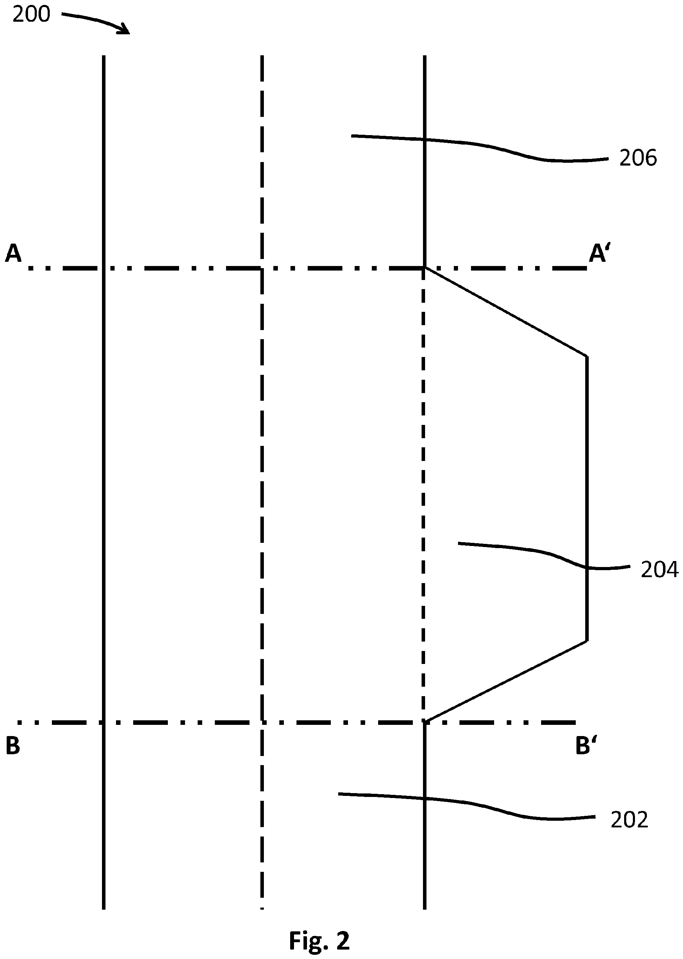

In the present disclosure, a link may be a road segment which is substantially homogenous. Homogenous in the present disclosure refers to having constant road properties along the road segment. For example, a road segment having the same number of lanes may be considered substantially homogenous. As depicted in Fig. 2, roads frequently have variable lane configurations along a given driving direction, such as road 200. For example, the addition of lanes at highway exits or the reduction of lanes when roads merge; the presence of dedicated turn lanes, bus or bicycle lanes; temporary lane shifts due to road construction or traffic management initiatives, or the like. These dynamic lane arrangements can significantly impact traffic flow and driver behavior. In Fig. 2, lanes of the road 200 increase from two lanes to three lanes at BB', and creases from three lanes to two lanes at AA'. In this case, the road 200 is thus divided by the dashed-dotted lines AA' and BB' into three links 202, 204 and 206. The links 202 and 206 have two lanes of road, and the link 204 has three lanes of road. By dividing the road 200 into three links depending on the number of lanes each link contains, the stress index of a route can be accurately evaluated. Particularly, such link may represent a smallest unit for evaluating the stress index of the route.

In one embodiment, the definition of a link may additionally depend on other factors, such as the type of road markings painted on it. For example, a two-lane link: one section is painted by a combination of white dashed and solid lines following the direction of travel, while another section is painted by solely white dashed lines following the direction of travel, may be defined as comprising two distinct sub-links. Such detailed division of links can improve the accuracy of the stress index evaluation.

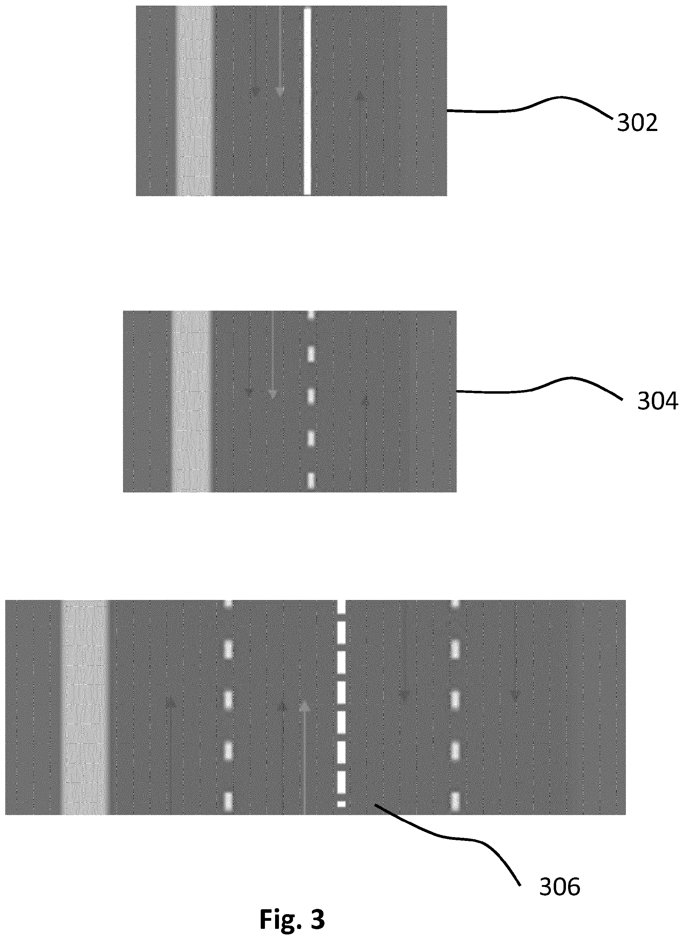

Fig. 3 depicts links with various lanes associated with different complexities. For example, the complexity of a link may be associated with the number of lanes the link contains and the possibility of changing from one lane to another during driving. For instance, link 302 is a dual-lane roadway, demarcated by a solid white line. This continuous line signifies an impermissible zone for lane changes, thus making it impossible to switch from one lane to another. A driver driving on such road would be subjected to a low stress since overtaking is forbidden. The complexity of the link 302 may be considered as simple (resulting in low stress index). Turning to link 304, which has two lanes and it is possible to change from one lane to another. In such case, behaviors of other drivers such as overtaking, passing by and merging may induce stress. Thus, the complexity of the link 304 may be considered as intermediate (resulting in moderate stress index). Additionally, it is common that a road has more than two lanes and it is also possible to change from one lane to other lanes, such as the link shown in 306. Driving on such a road may induce high stress for a driver. Thus, the complexity of the link 306 may be considered as high (resulting in high stress index).

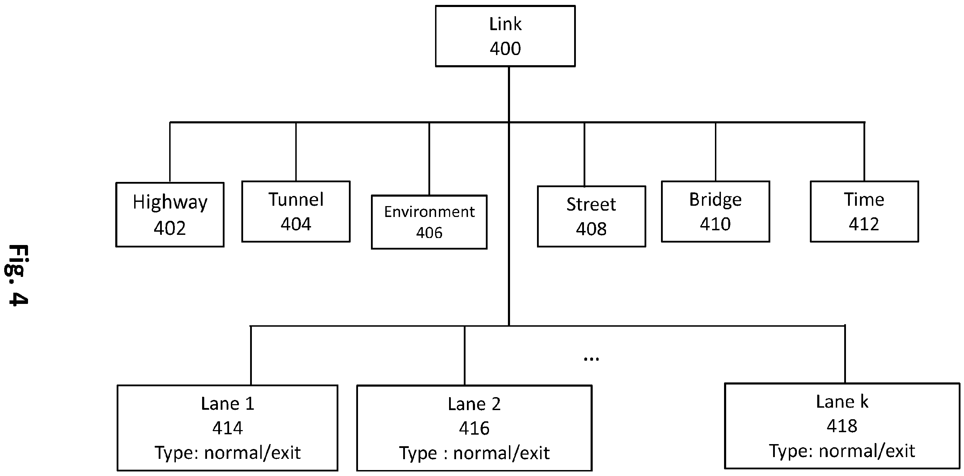

Fig. 4 depicts attributes that may influence the stress of a link 400. Apart from the number of lanes and possibility of changing lanes, the stress of the link 400 may also depend on whether the current lane is an exit. In one embodiment, the link may also be distinguished based on their location and/or surrounding environment. For example, urban road, country road, suburban road, or the like. In the present disclosure, the stress of the link may be described by a link model:

$$((\sum_{lanes} (lane_k + change_k) \cdot enviroment) + highway_k + tunnel_k + bridge_k + normal_k)$$
$$\cdot time$$

whereby k represents the k-th lane of the link (k ranges from 1 to k); $lane_k$ refers to the complexity of the k-th lane depending on attribute relating to whether the lane includes an exit. For example, the lane can be a normal lane without exit, or a lane including an exit. A lane including an exit has a higher complexity compared with the one without an exist. Thus, the lane including an exit may be assigned a higher coefficient to this attribute, indicating that it may increase the complexity of the link. $change_k$ refers to the complexity of the link associated with attributes relating to whether it is possible to change from one lane to another. For example, if it is possible to change from one lane to another, the complexity of the link increases, which in turn increases the stress index of the road. *Enviroment* refers to the complexity of the link associated with the road type of the link, which proportionally increases or decreases the complexity of the link. The attribute of *enviroment* may be an urban road, country road or suburban road, which indicates location and/or surrounding environment the link may be subjected to. $highway_k$, $tunnel_k$, $bridge_k$, and $normal_k$ refer to complexity of the link associated with whether the link is at least part of a highway, tunnel, bridge, or a normal street. For example, if the link is a part of a tunnel or bridge, the complexity increases accordingly. It goes without saying that other factors may also be considered and defined to comprehensively evaluate the stress the link. For example, the presence of construction sites along the route could contribute to traffic disruptions and heightened stress indexes. Similarly, the proximity of institutions like kindergartens and schools could potentially increase the complexity of the driving environment due to factors like pedestrian crossings, school buses, and increased traffic during drop-off and pick-up times. *time* refers to the time used to pass through the link.

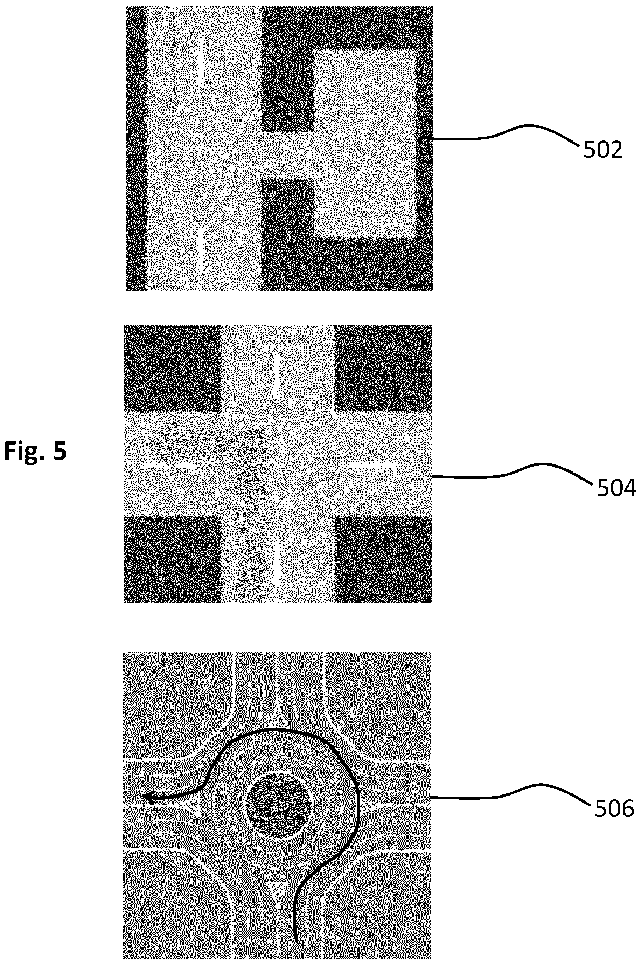

As mentioned before, the stress index of a road is not only influenced by the complexity of links, but also the complexity of intersections. Fig. 5 illustrates three different intersections 502, 504 and 506 associated with different complexities. In the present disclosure, the complexity of an intersection may be associated with the type of the intersection, the direction of turn which is going to make, and the links included in the intersection.

For example, in Fig. 5, the intersection 502 has a simple form in that one road merging into the intersection is an end of the road. That is, there is significantly less traffic on this road. A driver driving across such intersection would be subjected to a low stress. The complexity of the intersection 502 may be considered as low (resulting in a low stress index). Turning to intersection 504, which is a cross-shaped intersection and the intended turning direction is left. In such case, the driver is under more stress. The complexity of the intersection 504 may be considered as intermediate (resulting in an intermediate stress index). Additionally, it is common that an intersection is a complicated roundabout as shown in 506, which includes more than two lanes. A river driving on this intersection and plans to turn left would be objected to a high stress. Thus, the complexity of the intersection 506 may be considered as high (resulting in a high stress index).

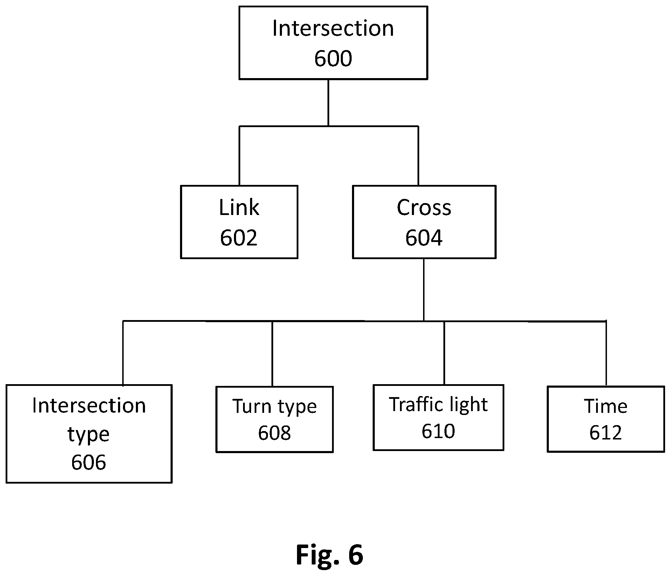

Fig. 6 shows attributes that may influence the stress of an intersection. In the present disclosure, an intersection may be considered as including a link and a crossing. The determination of the stress of the link may be the same as described above. Additionally, the type of the intersection, the type of turning, whether there is traffic light at the intersection may also influence the stress index. Similar to the stress used in the link, the time taken to cross an intersection can also influence the stress. This means that the longer it takes to cross an intersection, the more stress it is likely to induce. This is particularly relevant when driving on an intersection like 506.

Based on these attributes, in an embodiment, the stress of an intersection may be described by the following intersection model:

$$(nodetype_k + turntype_k + trafficlight_k + \sum_{link}) \cdot time$$

whereby $nodetype_k$ refers to the complexity of the intersection associated with the attribute relating to how roads merge at the intersection, which can include crossroads, ends of roads with traffic lights or significant road signs. This may include an intersection where two or more lanes or roads are merging into one; an intersection where two or more roads meet and cross each other; an intersection where one road meets another at a right angle but does not cross it, forming a "T" shape when viewed from above; an intersection involving multiple roads or lanes; and any other situations where lanes or roads are merging that are not covered by former categories. For example, a cross-shaped intersection can be assigned with a higher coefficient, and a T-shaped intersection can be assigned a lower coefficient.

$turntype_k$ refers to the complexity of the intersection associated with the attribute relating to the type of directional movement allowed or expected at the crossing. This may include straight ahead, meaning no turns are being made and the vehicle continues along its current road; a turn at the intersection interfering with pedestrian traffic, e.g. making a right turn at an intersection where pedestrians are currently crossing the street, which indicates a more complex scenario that increase the stress, as the driver must yield to pedestrians; a turning interfering with other traffics, e.g. a left turn across oncoming traffic lanes, which could potentially increase the stress index; or a U-turn, meaning a vehicle is making a 180-degree turn to proceed in the opposite direction. i.e. this maneuver can be complex and may subsequently increase the stress.

$trafficlight_k$ refers to the complexity of the intersection associated with the presence of a traffic light at the crossing, i.e. if there's a traffic light, the complexity increases.

$time$ refers to the driving time required to navigate the intersection; and $\Sigma_{link}$ refers to stress of the sum of the links the driver travels through when crossing the intersection, which is equal to the link model.

Based on the link model and intersection model, the stress index of the route 114 can be determined by summing stress of each link and intersection in this route.

In some embodiments, a variety of coefficients may be predefined and assigned to the attribute of both links and intersections. These coefficients are used to determine the stress index of a chosen route. The following Table 1 provides an illustrative example of how these coefficients may be assigned. Importantly, the present disclosure is not confined to this specific assignment of coefficients. It merely serves as one possible implementation.

| Atribute | Type | Coefficient | meaning |
|---|---|---|---|
| TurnTypeAttribute | TT_STRAIGHT_DRIVING | "+10" | No interference |
| | TT_TURN_INTERFERES_PEDESTRIANS | "+20" | Interfering with pedestrian (pedestrian crossing, or |
| | | | pedestrian traffic light) |
| | TT_TURN_INTERFERES_ROADS | "+20" | Interfering with other roads (loss of right of way or traffic light) |
| | TT_U_TURN | "+20" | U-turn manoeuvre (rare occurrence at start of route, usually interferes with everything) |
| TunnelAttribute | | "+1" | A boolean flag informing about the existence of a tunnel within that road segment |
| TrafficLightAttribute | | "*2" | An integer informing about the number of traffic lights within that road segment |
| RoadAttribute | URBAN | "*2" | |
| | SIMPLE | | |
| | UNKNOWN | | |

(continued)

| Atribute | Type | Coefficient | meaning |
|---|---|---|---|
| NodeTypeAttribute | NT_ONE_WAY_MERGING | "+10" | 2 to 1 (merge) or 1 to 2 (bifurcation) of a one way road |
| | NT_CROSSING_JUNCTION | "+20" | Regular junction (possibly complex) |
| | NT_OTHER_MERGING | "+20" | Merge or bifurcation involving ramps/slip lanes |
| | NT_T_JUNCTION | "+20" | Three-way ("T") junction |
| MotorwayAttribute | | "+1" | A boolean flag, informing whether that road segment belongs to a motorway |
| BridgeAttribute | | "+1" | A boolean flag informing about the existence of a bridge within that road segment |
| LaneAttribute | | | A set of integer attributes informing about the count of normal lanes, entry lanes, exist lanes, etc. within that road segment. |
| | NORMAL | | |
| | EXIT | "+1" | |
| UrbanAttribute | | "+1" | A boolean flag indicating whether that road segment is administratively associated to a village/city |
| TimeAttribute | | "*time_value" | |

In one embodiment, the complexity of the link may be set to 1, indicating a base level of the complexity. During reading a road information, the model reads the input data configuration file defining various roads and intersection and specifying their properties and relationships. For example, the input data may be a JSON, or format road description. For each link or intersection, a set of attributes may be provided in an array format. Attributes might include types and coefficients like those shown in Table 1. Each attribute has a specific type (e.g., string, number, boolean) and can have an arbitrary number of additional parameters. Some attributes may also include arrays of other attributes, which can be used to represent more complex or nested data structures. When processing the configuration file, the reading (parsing) of attributes is done recursively, meaning the reader (parser) would handle the nested arrays of attributes by repeatedly applying the same parsing procedure to each nested level.

Once all attributes have been converted into operators, the model begins to execute these operators one by one, in a specific order based on their priority and sequence. Each operator modifies the model's complexity value as it's executed. For instance, an attribute representing a tunnel might increase the complexity value, because tunnels are typically more complex to navigate than simple roads. Thus, if the route 114 includes a tunnel, the stress index of the route will be increased.

By the end of this process, the model's complexity value will have been adjusted to reflect the overall complexity of the link as represented by the input data. This final complexity indicates the stress index of the route. The model then goes through a process of sequentially calling each operator, with consideration for their priority and sequence, e.g. some operators might be applied before others, depending on their set priority and the order in which they are supposed to be applied (sequence). This process effectively allows the model to adjust its complexity value based on the operators derived from the attributes.

The following are examples of a link configuration file and an intersection configuration file. Importantly, the present disclosure is not confined to this specific example. It merely serves as one possible implementation.

[

(continued)

```
  {
    "type": "link",
    "attributes": [
      {
        "type": "road",
        "class": "URBAN",
        "attributes": [
          {
            "type": "line",
            "class": "NORMAL",
            "is_changeable": true
          },
          {
            "type": "line",
            "class": "NORMAL",
            "is_changeable": true
          },
          {
            "type": "line",
            "class": "EXIT",
            "is_changeable": false
          }
        ]
      },
      {
        "type": "highway",
        "value": true
      },
      {
        "type": "tunnel",
        "value": true
      },
      {
        "type": "bridge",
        "value": true
      },
      {
        "type": "urban",
        "value": true },
      },
      {
        "type": "time",
        "value": 10.2
      }
    ]
  }
]
```

```
[
  {
```

```
      "type": "cross",
      "attributes": [
        {
          "type": "nodetype",
          "value": "NT_CROSSING_JUNCTION"
        },
        {
          "type": "turntype",
          "value": "TT_TURN_INTERFERES_PEDESTRIANS"
        },
        {
          "type": "time",
          "value": 1
        },
        {
          "type": "trafficlight",
          "value": false
        },
        {
          "type": "link",
          "attributes": [
            {
              "type": "road",
              "class": "URBAN",
              "attributes": [
                {
                  "type": "line",
                  "class": "NORMAL",
                  "is_changeable": true
                },
                {
                  "type": "line",
                  "class": "NORMAL",
                  "is_changeable": true
                },
                {
                  "type": "line",
                  "class": "EXIT",
                  "is _changeable": false
                }
              ]
            },
            {
              "type": "motorway",
              "value": true
            },
            {
              "type": "tunnel",
              "value": true
            },
            {
```

(continued)

```
              "type": "bridge",
              "value": true
           },
           {
              "type": "urban",
              "value": true
           }
        ]
      }
    ]
  }
]
```

The invention further relates to a computer readable medium comprising instructions which, when executed by a computing device, the above mentioned computer system or the above mentioned computing device, cause the computing device or system to carry out the above described method. It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

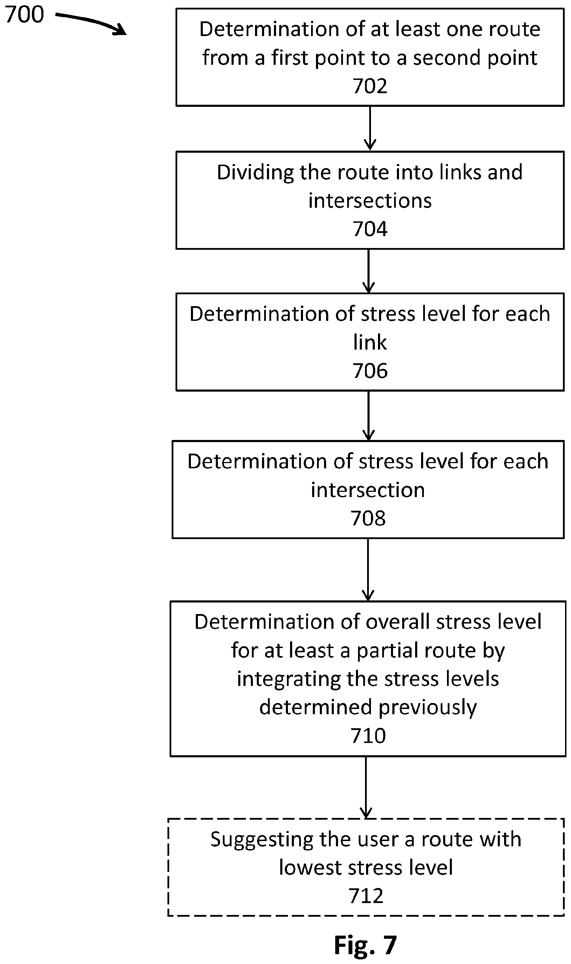

Fig. 7 depicts a process 700 of determining a stress index of a route by a stress index determination system according to one or more embodiments. At step 702, under user requirement, a stress index determination system or the like may determine at least one route from a first point (start) to a second point (destination). The user may require the route from an integrated navigation system in a vehicle, or from a navigation application on a smart device (smart phone, smart tablet, smart watch, etc.). The stress index determination system may be implemented as software, hardware, firmware or the like which can analyse various factors and calculate the stress index associated with a particular route. At step 704, the stress index determination system divides the at least one route into links and intersections similar to those illustrated in Fig. 1. At step 706 and 708, the stress index determination system determines stress of each links and intersections according to the methods as described above. At step 710, the stress index determination system determines the overall stress index for the one or more routes by integrating the stress of each links and intersection in this route. Particularly, it is imaginable that a user may only be interested in the stress index of a particular section within a route. In this case, the stress index determination system does not have to divide the entire route into links and intersection. As an optional step 712, the stress index determination system may compare the stress indexes of various routes and suggest to the user a route with the lowest stress index.

In some embodiments, it may happen that sometimes although the overall stress of a road is low compared with other roads, the stress index of a specific section of the route is particularly high. Therefore, alternatively, or additionally, the stress index determination system may define lowest stress index based on the overall stress index and stress index of each section of a route under a predefined value.

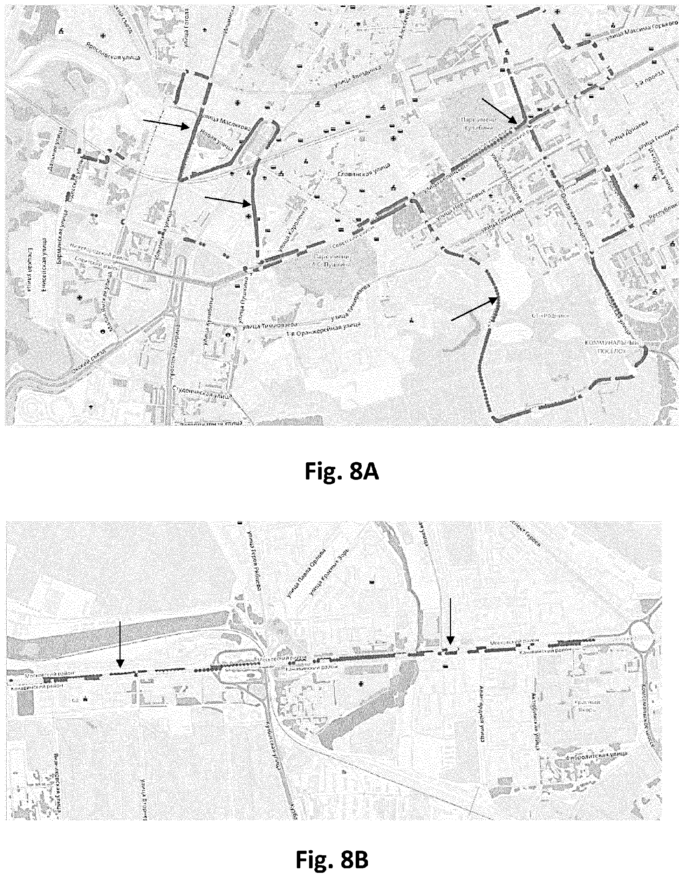

Fig. 8A to 8C are exemplary visual representations of the stress indexes of various routes determined by the stress index determination system according to an embodiment. These figures illustrate the stress indexes along different routes, with dark grey-colored road segments indicating relatively high stress and light grey-colored road segments indicating relatively low stress. Each figure focuses on a specific driving environment to showcase the impact on stress index.

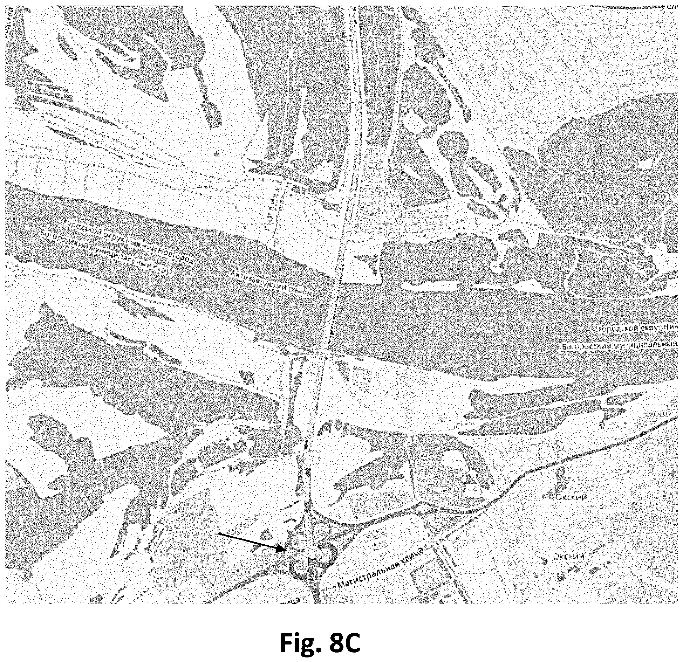

In Fig. 8A, the stress index of a route within an urban area is depicted. The routes are depicted by arrows shown in the figures. This urban setting often leads to higher stress index due to influences from dense traffic, complex intersections, and influences from pedestrians. The darkcolored road segments on the route highlight areas where drivers are likely to experience elevated stress index. Fig. 8B illustrates the stress index of a route that encompasses both urban and highway areas. This figure illustrates that the stress index can vary along the route. Urban areas continue to induce relatively high stress due to traffic congestion and complex road structures, while the stress index decreases when driving on highways with simpler traffics. In Fig. 8C, the focus shifts to stress index specifically associated with driving on a highway. As expected, driving on a highway generally results in a lower stress index compared to urban environments. Highways typically offer fewer complex intersections, a more predictable traffic flow, and fewer distractions, which contribute to a relatively stress-free driving experience. Nevertheless, the driver experiences relative high stress index at exits of highways, as the driver has to focus on increasing road signs and speed limits.

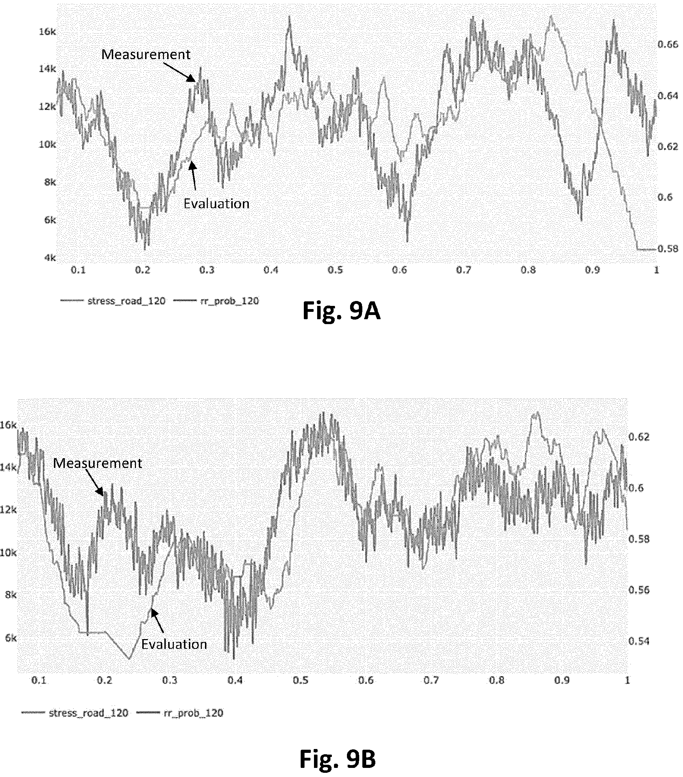

Fig. 9A and 9B are comparisons of the stress index determined by the stress index determination system and experimental measurements. For the experimental measurements, a stress detector is attached to the driver to measure heart interbeat intervals (IBIs) for evaluating the driver's stress index at each moment of measurement. On the graphs in Fig. 9A and 9B, the horizontal axis represents time, spanning a duration of 20 minutes. The vertical axis represents stress index. The light grey-colored line represents the stress index evaluated by the stress index determination system, while the dark grey-colored line represents the stress index measured through the experimental approach.

Although it is apparent that the stress of a driver does not solely depend on the route (e.g. the driver may be also subjected to stress induced by work, health, etc.), the results shown in the graphs demonstrate a good correlation between the stress index evaluated by the stress index determination system and the stress index measured by the experiments. This correlation indicates that the stress index determination system is effective in assessing stress index experienced by drivers, as validated by the experimental data.

In the present disclosure, it should be understood that the disclosed features and embodiments are not exclusive or exhaustive, but rather illustrative. Various combinations, adaptations, and modifications of the described embodiments are possible and are within the scope of the invention. For instance, features delineated as part of one embodiment may be incorporated into another embodiment to generate a new configuration, even if the specific combination is not explicitly delineated within the individual embodiment descriptions. Accordingly, the scope of the invention should not be limited by the specific embodiments described herein, but should be defined by the appended claims, along with the full range of equivalents to which such claims are entitled.

**Claims**

1.  A computer implemented method for determining a stress index of a route, comprising:

    determining, based on a cartographic representation, at least one route from a first point to a second point;
    dividing, by a stress index determination system, the at least one route into one or more links and/or intersections;
    determining, by the stress index determination system, the stress for the at least one or more links and/or intersections;
    combining, by the stress index determination system, the stress of the one or more links and/or intersections to obtain an overall stress index of the one or more routes.

2.  The method according to claim 1, wherein the link is a road segment having substantially constant road properties along the road segment.

3.  The method according to claims 1 or 2, wherein the stress of the link is determined based on a complexity of the link.

4.  The method according to claim 3, wherein the complexity of the link is determined based on attributes of the link relating to a number of lanes of the link and whether it is possible to change from one lane to another.

5.  The method according to any of the preceding claims, wherein the stress of the link is determined based on at least one of the following attributes:

    - time used by passing the link;
    - whether the link is at least part of a highway, tunnel, bridge or normal street.

6.  The method according to claims 4 or 5, wherein the attributes are assigned with respective coefficients to indicate the complexity of the attribute.

7.  The method according to claim 5, wherein the stress of the link is determined as:

$$\left(\left(\sum_{lanes}(lane_k + change_k) \cdot enviroment\right) + highway_k + tunnel_k + bridge_k + normal_k\right) \cdot time$$

Wherein

coefficient *k* represents a first to *k*-th lane, coefficient $lane_k$ represents complexity of the k-th lane of the link, coefficient $change_k$ represents complexity of the lane associated with whether it is possible to change from one lane to another, and coefficient *enviroment* represents a road type that proportionally increases or decreases the complexity of the link, coefficients $highway_k$, $tunnel_k$, $bridge_k$, and $normal_k$ represent complexity of the link associated with presence or absence of a highway, tunnel, bridge or normal road, respectively.

8. The method according to claim 7, wherein the coefficient enviroment depends on whether the link is a part of an urban road, country road or suburban road.

9. The method according to any of the preceding claims, wherein the intersection is a junction where more than two links converge, and the intersection comprises a crossing and a link at the intersection.

10. The method according to any of the proceeding claims, wherein the stress of the intersection is determined depending on at least one of the following factors:

   - time used to pass by the intersection;
   - type of the intersection;
   - type of turning at the intersection;
   - whether there is traffic light at the intersection;
   - the stress index of the link at the intersection.

11. The method according to any of the preceding claims, wherein the stress of the intersection is defined as:

$$(nodetype_k + turntype_k + trafficlight_k + \sum_{link}) \cdot time$$

wherein coefficient $nodetype_k$ represents complexity of the intersection associated with the type of the intersection or road ending; coefficeint $turntype_k$ represents complexity of the intersection associated with the type of directional movement allowed or expected at the crossing, coefficient $trafficlight_k$ represents complexity of the intersection associated with the presence of a traffic light at the crossing, coefficient *time* represents the driving time required to navigate the crossing, and coefficient $\sum_{link}$ represent stress index of the link at this intersection in which a driver passes through.

12. The method according to any of the preceding claims, the method further comprising: comparing the stress index of the one or more routes and generating an indication to a user to suggest a route having the lowest stress index.

13. A stress index determination system for determining stress index of a route, wherein the stress index determination system is configured to carry out the methods according to any of the proceeding claims.

14. A navigation system for navigating a route, wherein the navigation system comprises the stress index determination system according to claim 13.

15. A computer readable medium comprising instructions which, when executed by a computing device, cause the computing device to carry out the method according to any of claims 1-12.

**Fig. 1**

200

206

A ——————————— A'

204

B ——————————— B'

202

**Fig. 2**

**Fig. 3**

**Fig. 4**

**Fig. 5**

502

504

506

```
                    ┌─────────────┐
                    │ Intersection│
                    │     600     │
                    └─────────────┘
                           │
              ┌────────────┴────────────┐
         ┌─────────┐              ┌─────────┐
         │  Link   │              │  Cross  │
         │   602   │              │   604   │
         └─────────┘              └─────────┘
                                       │
           ┌──────────┬────────────────┼──────────────┐
    ┌──────────────┐ ┌──────────┐ ┌──────────────┐ ┌────────┐
    │ Intersection │ │Turn type │ │Traffic light │ │  Time  │
    │     type     │ │   608    │ │     610      │ │  612   │
    │     606      │ └──────────┘ └──────────────┘ └────────┘
    └──────────────┘
```

**Fig. 6**

700

Determination of at least one route
from a first point to a second point
702

↓

Dividing the route into links and
intersections
704

↓

Determination of stress level for each
link
706

↓

Determination of stress level for each
intersection
708

↓

Determination of overall stress level
for at least a partial route by
integrating the stress levels
determined previously
710

↓

Suggesting the user a route with
lowest stress level
712

**Fig. 7**

**Fig. 8A**

**Fig. 8B**

**Fig. 8C**

Fig. 9A

Fig. 9B

Europäisches
Patentamt

European
Patent Office

Office européen
des brevets

# EUROPEAN SEARCH REPORT

**Application Number**

EP 23 20 7063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/128784 A1 (HARMAN INT IND [US]; FILIMONOV ANDREY VIKTOROVICH [RU]) 6 July 2023 (2023-07-06) | 1-10, 12-15 | INV. G01C21/34 |
| A | * page 6, fourth paragraph – page 7, first paragraph; claim 1 * | 11 | |
| X | US 2016/377444 A1 (DELUCA LISA SEACAT [US] ET AL) 29 December 2016 (2016-12-29) | 1-3,5,6, 9,10, 12-15 | |
| A | * paragraph [0075] * | 11 | |
| X | US 2019/186936 A1 (EBNER DIETMAR [US] ET AL) 20 June 2019 (2019-06-20) | 1-3,5,6, 9,10, 12-15 | |
| A | * paragraphs [0057] – [0068]; figures 7-11 * | 11 | |
| X | US 2016/025505 A1 (OH YOUNG CHUL [KR] ET AL) 28 January 2016 (2016-01-28) | 1-6,9, 10,12-15 | |
| A | * paragraphs [0027] – [0040] * | 11 | **TECHNICAL FIELDS SEARCHED (IPC)** |
| X | US 2010/030464 A1 (MITTERMAIER WERNER [DE]) 4 February 2010 (2010-02-04) | 1-6,9, 10,12-15 | G01C |
| A | * paragraph [0005]; claim 14; figure 14 * | 11 | |

The present search report has been drawn up for all claims

| Place of search | Date of completion of the search | Examiner |
|---|---|---|
| The Hague | 9 April 2024 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7063

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| WO 2023128784 A1 | 06-07-2023 | NONE | |
| US 2016377444 A1 | 29-12-2016 | US 9384661 B1 | 05-07-2016 |
| | | US 2016377444 A1 | 29-12-2016 |
| | | US 2016377447 A1 | 29-12-2016 |
| | | US 2017089712 A1 | 30-03-2017 |
| US 2019186936 A1 | 20-06-2019 | AU 2018385335 A1 | 09-07-2020 |
| | | AU 2020230354 A1 | 01-10-2020 |
| | | CA 3085725 A1 | 20-06-2019 |
| | | CN 111480052 A | 31-07-2020 |
| | | CN 114216475 A | 22-03-2022 |
| | | EP 3724606 A1 | 21-10-2020 |
| | | JP 6959450 B2 | 02-11-2021 |
| | | JP 2021507206 A | 22-02-2021 |
| | | KR 20200074255 A | 24-06-2020 |
| | | SG 11202005531P A | 29-07-2020 |
| | | US 2019186936 A1 | 20-06-2019 |
| | | US 2020264003 A1 | 20-08-2020 |
| | | WO 2019118161 A1 | 20-06-2019 |
| US 2016025505 A1 | 28-01-2016 | CN 105318884 A | 10-02-2016 |
| | | KR 20160013713 A | 05-02-2016 |
| | | US 2016025505 A1 | 28-01-2016 |
| US 2010030464 A1 | 04-02-2010 | DE 102007018084 A1 | 23-10-2008 |
| | | EP 2135037 A1 | 23-12-2009 |
| | | ES 2624773 T3 | 17-07-2017 |
| | | US 2010030464 A1 | 04-02-2010 |
| | | WO 2008125162 A1 | 23-10-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.D. HILL et al.** *Transportation Research Part F*, 2007, vol. 10 (3), 177
- **O. BITKINA et al.** *mdpi sensors*, 2019, vol. 19 (9), 2152
- **M. RINGHARD et al.** *Transportation Research Part F*, 2019, vol. 60, 274

- **N. DISTEFANO et al.** *Physiological and driving behavior changes associated with different road intersections, European Transport*, 2020, vol. 77, 4